# EUROPÄISCHE PATENTSCHRIFT

(11) **EP 3 026 389 B1**
(45) Veröffentlichungstag und Bekanntmachung des Hinweises auf die Patenterteilung: **11.01.2017**
(21) Anmeldenummer: 14194858.8
(22) Anmeldetag: 26.11.2014
(51) Int. Cl.: G01D 5/347, G01B 5/00, B23Q 17/22

(54) **Längenmesseinrichtung**
Length measuring device
Dispositif de mesure de longueur

(43) Veröffentlichungstag der Anmeldung: 01.06.2016
(73) Patentinhaber: Dr. Johannes Heidenhain GmbH, 83301 Traunreut (DE)
(72) Erfinder: Bauer, Kilian, 83362 Surberg (DE); Pucher, Wolfgang, 83278 Traunstein (DE); Sigl, Thomas, 83071 Stephanskirchen (DE)

(56) Entgegenhaltungen:
- EP-A2- 0 736 750
- DE-A1-102005 027 025

## Beschreibung

### GEBIET DER TECHNIK

Die vorliegende Erfindung betrifft eine Längenmesseinrichtung nach dem Oberbegriff des Anspruchs 1.

### STAND DER TECHNIK

Derartige Längenmesseinrichtungen werden insbesondere in Bearbeitungsmaschinen zur Messung der Relativlage eines Werkzeugs bezüglich eines zu bearbeitenden Werkstücks, in Koordinatenmessmaschinen zur Ermittlung von Lage und Abmessungen von Prüfobjekten sowie auch in der Halbleiterindustrie eingesetzt. Dabei wird der Maßstab an einem Träger, z. B. an der Antriebseinheit (z. B. Linearmotor) direkt angebaut oder der Maßstab an einem durch die Antriebseinheit angetriebenen Bauteil angebaut. Stationär gegenüber dem bewegten Maßstab ist eine Abtasteinheit der Längenmesseinrichtung an einem zweiten Objekt angeordnet, dessen Relativposition gegenüber dem Träger gemessen werden soll.

Zur Bildung eines Fixpunktes des Maßstabs gegenüber dem Träger ist es bekannt, diesen an einer Stelle am Träger in Messrichtung ortsfest zu fixieren.

In den meisten Fällen bestehen der Maßstab und der Träger aus Materialien mit unterschiedlichen thermischen Ausdehnungsverhalten. Die ortsfeste Fixierung ist derart auszugestalten, dass bei Temperaturänderungen keine Zwangskräfte vom Träger auf den Maßstab ausgeübt werden.

Gemäß der EP 0 264 801 A1 erfolgt die ortsfeste Fixierung des Maßstabs mittels einer Kugel, die einerseits in einer V-Nut des Maßstabs und andererseits in einer V-Nut einer Fassung eingesetzt ist und somit einen Formschluss bildet. Der Maßstab wird mittels einer Feder an die Kugel gedrängt, so dass der Formschluss zwischen der Kugel und dem Maßstab einerseits sowie zwischen der Kugel und der Fassung andererseits gewährleistet ist.

Gemäß der WO 02/27265 A2 erfolgt die in Messrichtung ortsfeste Fixierung mittels eines Montageelementes das einen ersten Befestigungsabschnitt aufweist, mit dem es ortsfest am Maßstab befestigt ist, und das einen zweiten Befestigungsabschnitt aufweist, mit dem es an einem Träger befestigt ist. Zwischen dem ersten Befestigungsabschnitt und dem zweiten Befestigungsabschnitt ist ein Rollenlager vorgesehen, das eine Verlagerung des Maßstabs gegenüber dem Träger senkrecht zur Messrichtung zulässt.

DE 10 2005 027 025 A1 offenbart eine Längenmesseinrichtung mit einem Montageelement, mit dem der Maßstab der Längenmesseinrichtung in Längsrichtung an einem Träger befestigbar. Das Montageelement mit biegbaren Streben ist dazu ausgebildet, den Maßstab in Messrichtung X auslenkbar am Trägekörper anzukoppeln,

EP 0 736 750 A2 offenbart eine Längenmesseinrichtung mit einem Montageelement zur Montage eines Maßstabes an einem Träger, wobei ein Längen-Ausgleichselement für thermisch bedingte Ausdehnungen ausgebildet ist, das als Federparallelogramm gebildet ist.

### ZUSAMMENFASSUNG DER ERFINDUNG

Der vorliegenden Erfindung liegt die Aufgabe zugrunde, eine Längenmesseinrichtung anzugeben, die kompakt aufgebaut ist und mit der eine genaue Positionsmessung ermöglicht ist.

Diese Aufgabe wird erfindungsgemäß durch eine Längenmesseinrichtung mit den Merkmalen des Anspruchs 1 gelöst.

Die erfindungsgemäß ausgebildete Längenmesseinrichtung umfasst einen Maßstab, der sich in einer Längsrichtung erstreckt und der eine Messteilung zur Positionsmessung in Längsrichtung aufweist. Der Maßstab ist mittels zumindest einem Montageelement in Längsrichtung starr an einem Träger befestigbar, welches einen ersten Befestigungsabschnitt aufweist, mit dem es ortsfest am Maßstab angeordnet ist, und einen zweiten Befestigungsabschnitt aufweist, der dazu ausgebildet ist, mit dem Träger ortsfest befestigt zu werden, wobei zwischen dem ersten Befestigungsabschnitt und dem zweiten Befestigungsabschnitt ein Mittel vorgesehen ist, das eine Bewegung des ersten Befestigungsabschnittes gegenüber dem zweiten Befestigungsabschnitt senkrecht zur Längsrichtung zulässt. Erfindungsgemäß ist dieses Mittel eine Anordnung mehrerer biegbarer Streben, welche durch Biegung die Bewegung des ersten Befestigungsabschnittes gegenüber dem zweiten Befestigungsabschnitt senkrecht zur Längsrichtung zulässt, wobei die Anordnung der Streben dazu ausgebildet ist die durch die Biegung verursachte Längenänderung der Streben derart auszugleichen, dass daraus keine Bewegung zwischen dem ersten Befestigungsabschnitt und dem zweiten Befestigungsabschnitt in Längsrichtung resultiert.

Im unbelasteten und somit unausgelenkten Zustand verlaufen die Streben in vorteilhafter Weise parallel zur Längsrichtung. Damit ist eine besonders stabile und steife Fixierung in Längsrichtung gewährleistet.

Jede der Streben ist als Festkörpergelenk ausgebildet, welches in Längsrichtung steif und senkrecht dazu ausbiegbar ist.

Der geforderte Ausgleich der Längenänderung der Streben kann durch Dehnung der Streben erfolgen. Hierzu sind ausgehend vom ersten Befestigungsabschnitt Streben in entgegengesetzte Richtungen zu einer starren Brücke verlaufend angeordnet, welche diese Streben in Längsrichtung starr miteinander verbindet, und dadurch die durch Biegung der Streben verursachte Längenänderung durch Dehnung der Streben ausgeglichen wird. Die Streben fungieren dabei als Zugstäbe in Längsrichtung und als Biegebalken in Querrichtung dazu.

Die in entgegengesetzten Richtungen verlaufenden Streben haben gleiche Federeigenschaften, so dass sie sich symmetrisch verformen.

Der geforderte Ausgleich der Längenänderung der Streben kann auch realisiert sein, indem ausgehend vom ersten Befestigungsabschnitt und ausgehend vom zweiten Befestigungsabschnitt jeweils eine Strebe in die gleiche Richtung zu einer Koppel hin verlaufen, welche die beiden Streben miteinander verbindet, und die durch die Biegung der Streben verursachte Längenänderung durch Verlagerung der Koppel in Längsrichtung ausgeglichen wird.

Diese Anordnung der Streben kann sich in vorteilhafter Weise wiederum beidseitig symmetrisch zum Fixpunkt erstrecken, so dass sich jeweils zwei Streben in eine gemeinsame Richtung erstrecken und diese Streben jeweils an ihren Enden mit einer Koppel miteinander verbunden sind, die sich bei einer Auslenkung der beiden Streben in Längsrichtung (Messrichtung) verlagert und die gegensinnige Biegungen der beiden miteinander verbundenen Streben ausgleicht.

Besonders vorteilhaft ist es, wenn an einander gegenüberliegenden Positionen des Maßstabs jeweils eines der Montageelemente angeordnet ist. Gegenüberliegend bedeutet dabei symmetrisch zur in Längsrichtung (Messrichtung) verlaufenden Symmetrieachse des Maßstabs.

Durch die Erfindung wird mit einfachen und platzsparenden Mitteln eine ortsfeste Fixierung des Maßstabs geschaffen, mit der gewährleistet ist, dass auch bei Temperaturänderungen keine Zwangskräfte vom Träger auf den Maßstab ausgeübt werden.

Vorteilhafte Ausführungen der erfindungsgemäßen Längenmesseinrichtung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: eine schematische Darstellung einer erfindungsgemäßen Längenmesseinrichtung;
- Figur 2: einen Schnitt II - II der Längenmesseinrichtung gemäß Figur 1;
- Figur 3: eine perspektivische Ansicht eines Montageelementes der Längenmesseinrichtung aus Figur 1;
- Figur 4: eine zweite Ausführungsform einer erfindungsgemäßen Längenmesseinrichtung;
- Figur 5: eine dritte Ausführungsform einer erfindungsgemäßen Längenmesseinrichtung, und
- Figur 6: eine vierte Ausführungsform.

### BESCHREIBUNG DER AUSFÜHRUNGSFORMEN

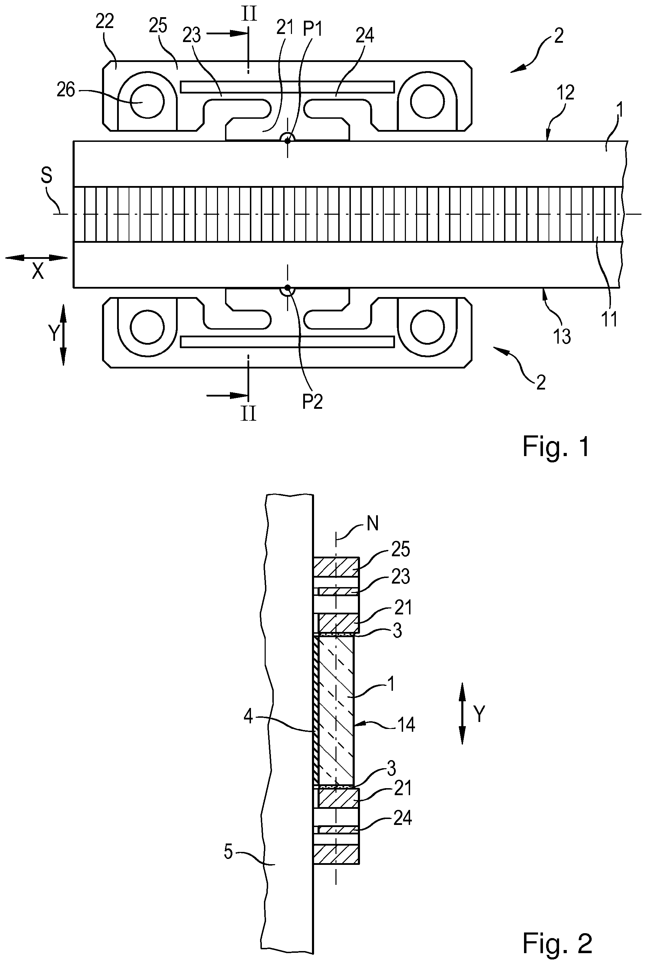

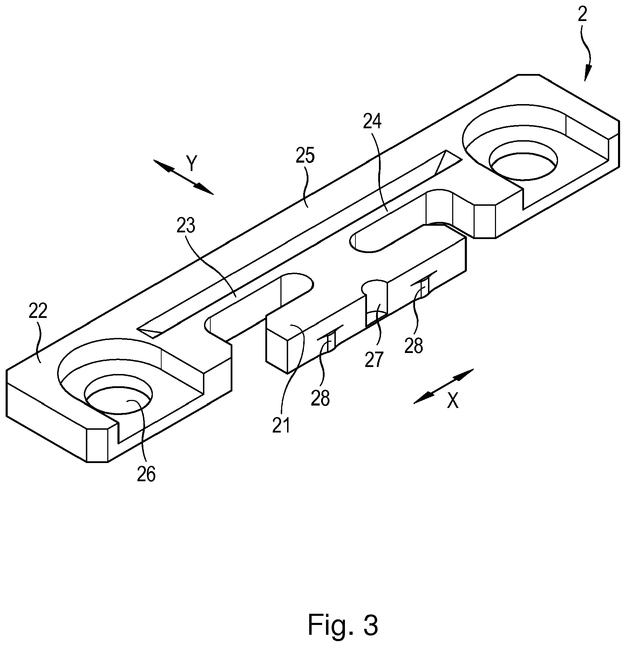

Eine erste Ausführungsform der Erfindung wird nachfolgend anhand der Figuren 1 bis 3 erläutert. Diese erfindungsgemäß ausgestaltete Längenmesseinrichtung umfasst einen Maßstab 1, der sich in einer Längsrichtung X erstreckt und der eine Messteilung 11 aufweist. Die Messteilung 11 ist als lichtelektrisch abtastbare Inkrementalteilung zur hochgenauen Positionsmessung in Längsrichtung X ausgebildet. Alternativ kann die Messteilung auch eine Absolutcodierung oder eine Messteilung zur Messung in Längsrichtung X sowie zusätzlich eine zweite senkrecht dazu verlaufende Richtung Y sein. Die Messteilung zur Messung in zwei Dimensionen X und Y kann als Kreuzgitter oder Schachbrett-Gitter ausgebildet sein.

Der Maßstab 1 besteht vorzugsweise aus einem Material mit vernachlässigbar kleinem thermischen Ausdehnungskoeffizienten, insbesondere mit einem thermischen Ausdehnungskoeffizient α im Temperaturbereich von 0° bis 50° kleiner als 1,5 x 10⁻⁶K⁻¹, insbesondere aber kleiner als 0,1 x 10⁻⁶K⁻¹. Derartige Materialien sind Glas bzw. Glaskeramik (z. B. ZERODUR) oder Metalle wie z.B. Invar.

Vorzugsweise weist der Maßstab 1 einen rechteckförmigen Querschnitt mit zwei in Längsrichtung verlaufenden einander gegenüberliegenden Seitenflächen 12 und 13 auf. Die Messteilung 11 ist in einer Messteilungsebene 14 angeordnet, die senkrecht zu diesen Seitenflächen 12 und 13 verläuft.

Der Maßstab 1 kann über seine gesamte Länge auf einem Träger 5 - beispielsweise der Tisch einer Werkzeugmaschine oder einer Messmaschine- aufgelegt sein und auf verschiedenste Weise daran gehalten werden. Diese Halterung kann mittels Spannpratzen erfolgen oder mittels elastischer Klebemittel oder mittels Hafthalterung durch einen viskosen oder viskoelastischen Flüssigkeitsfilm oder auch durch Luft- oder Kugellagerung. Im dargestellten Beispiel erfolgt die Halterung des Maßstabs 1 mittels einer Schicht 4, welche dazu ausgelegt ist den Maßstab 1 haftend an dem Träger 5 zu halten. Durch das Vorsehen der Schicht 4 zwischen dem Maßstab 1 und dem Träger 5 ist gewährleistet, dass der Maßstab 1 vom Träger 5 mechanisch entkoppelt ist. Bei Temperaturänderungen können sich Träger 5 und Maßstab 1 unabhängig voneinander ausdehnen.

Zur Bildung eines Fixpunktes, auch Bezugspunkt genannt, muss der Maßstab 1 an einer Position P1 in Längsrichtung X ortsfest am Träger 5 fixiert werden. Hierzu ist zumindest ein Montageelement 2 vorgesehen, mit dem der Maßstab 1 in Längsrichtung X starr an dem Träger 5 befestigbar ist. Das Montageelement 2 weist einen ersten Befestigungsabschnitt 21 auf, mit dem es ortsfest am Maßstab 1 angeordnet ist, und das Montageelement 2 weist einen zweiten Befestigungsabschnitt 22 auf, der dazu ausgebildet ist, mit dem Träger 5 ortsfest befestigt zu werden.

Zwischen dem ersten Befestigungsabschnitt 21 und dem zweiten Befestigungsabschnitt 22 sind Mittel vorgesehen, welche eine thermisch bedingte Ausdehnung des Maßstabs 1 relativ zu dem Träger 5 senkrecht zur Längsrichtung X - also in Richtung Y - zulassen. Hierzu ist der erste Befestigungsabschnitt 21 mit dem zweiten Befestigungsabschnitt 22 mittels zweier parallel zur Längsrichtung X ausgerichteter Streben 23 und 24 verbunden, welche durch Biegung und Dehnung eine Bewegung des ersten Befestigungsabschnittes 21 gegenüber dem zweiten Befestigungsabschnitt 22 senkrecht zur Längsrichtung X zulassen, wobei die beiden Streben 23 und 24 vom ersten Befestigungsabschnitt 21 ausgehend jeweils in entgegengesetzte Richtungen verlaufen. Die Anordnung der Streben 23, 24 lässt durch Biegung die Bewegung des ersten Befestigungsabschnittes 21 gegenüber dem zweiten Befestigungsabschnitt 22 senkrecht zur Längsrichtung X zu, wobei die Anordnung weiterhin dazu ausgebildet ist die durch die Biegung verursachte Längenänderung der Streben 23, 24 derart auszugleichen, dass keine Bewegung zwischen dem ersten Befestigungsabschnitt 21 und dem zweiten Befestigungsabschnitt 22 in Längsrichtung X resultiert.

Die Streben 23, 24 sind bezogen auf die Position P1 spiegelsymmetrisch angeordnet und weisen gleiche Federeigenschaften auf. Der erste Befestigungsabschnitt 21 ist - bezogen auf die Längsrichtung X - zentrisch zwischen den beiden Streben 23, 24 angeordnet. Durch das Vorsehen der Streben 23, 24 als Biegegelenke und gleichzeitig als Dehnelemente ist gewährleistet, dass eine Querbewegung zwischen dem Maßstab 1 und dem Träger 5 ermöglicht wird, der Maßstab 1 dabei aber seine ortsfeste Position P1 in Längsrichtung X gegenüber dem Träger 5 beibehält.

Eine besonders stabile Konstruktion des Montageelementes 2 ergibt sich, wenn der zweite Befestigungsabschnitt 22 eine starre Brücke 25 umfasst, welche die beiden Streben 23 und 24 endseitig miteinander verbindet.

Gemäß der Erfindung ist zumindest ein Montageelement 2 am Fixpunkt P1 vorgesehen. Besonders vorteilhaft ist eine zur Symmetrieachse S des Maßstabs 1 symmetrische Anordnung zweier gleichartig ausgebildeter Montageelemente 2 an gegenüberliegenden Punkten P1 und P2. Damit ergibt sich der Vorteil, dass eine thermische Dehnung in Richtung Y symmetrisch zur Symmetrielinie S ermöglicht ist und somit der Maßstab 1 bezogen auf die Symmetrielinie S thermisch stabil befestigt ist. Da die beiden Montageelemente 2 gleichartig aufgebaut sind, sind diese mit dem gleichen Bezugszeichen versehen und in der Figur 1 nur eines davon mit allen Bezugszeichen versehen.

Der erste Befestigungsabschnitt 21 des Montageelementes 2 ist jeweils an einer der beiden Seitenflächen 12, 13 angeordnet. Eine besonders vorteilhafte Montage ergibt sich, wenn der erste Befestigungsabschnitt 21 durch eine stoffschlüssige Verbindung an der Seitenfläche 12 bzw. 13 befestigt ist. Die stoffschlüssige Verbindung erfolgt insbesondere durch einen fest aushärtenden Klebstoff 3. Zur Aufnahme dieses Klebstoffes 3 ist am Montageelement 2 eine Dosiertasche 27 vorgesehen. Zur Bildung eines definierten Klebespaltes zwischen dem Maßstab 1 und dem Montageelement 2 sind am Montageelement 2 Abstandhalter 28 angebracht, die mit der Seitenfläche 12 bzw. 13 des Maßstabs 1 in Kontakt gebracht werden. Die in Messrichtung X voneinander beabstandeten Abstandhalter 28 gewährleisten einen definierten Klebespalt zwischen dem Montageelement 2 und der Seitenfläche 12 bzw. 13 des Maßstabs 1. In Messrichtung X betrachtet ist beidseitig jedes der beiden Abstandhalter 28 ein Klebstoff eingebracht.

Besonders vorteilhaft ist es, wenn die Streben 23, 24 in einer Ebene angeordnet sind, welche die neutrale Faser N des Maßstabs enthält und die Messteilung 11 in einer Ebene parallel zu dieser neutralen Ebene des Maßstabs 1 ausgerichtet ist.

Der zweite Befestigungsabschnitt 22 des Montageelementes 2 umfasst zumindest eine Ausnehmung 26 zur Aufnahme einer nicht dargestellten Befestigungsschraube zum ortsfesten Anschrauben an dem Träger 5. Die Brücke 25 des Montageelementes 2 verhindert beim Anschrauben weitgehend eine Verformung der Streben 23 und 24.

Die Streben 23, 24 sind in Form von Festkörpergelenken ausgebildet. Besonders vorteilhaft ist es, wenn das Montageelement 2 einstückig ausgebildet ist und die Streben 23, 24 dabei jeweils in Form von Schwachstellen zwischen dem ersten Befestigungsabschnitt 21 und dem zweiten Befestigungsabschnitt 22 ausgebildet sind.

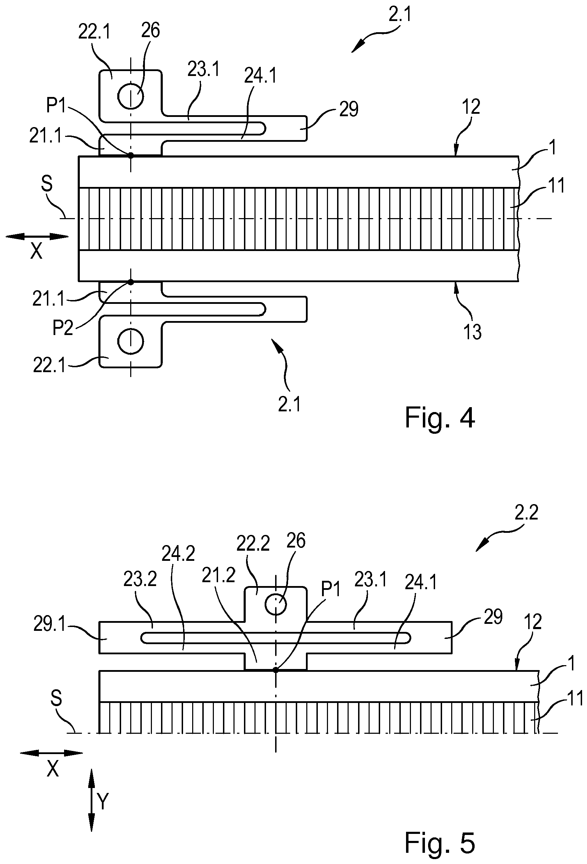

Anhand der Figur 4 wird nachfolgend eine zweite Ausführungsform der Erfindung erläutert. Ausgehend vom ersten Befestigungsabschnitt 21.1 und ausgehend vom zweiten Befestigungsabschnitt 22.1 ist jeweils eine Strebe 23.1, 24.1 in die gleiche Richtung zu einer Koppel 29 hin verlaufend angeordnet. Die Koppel 29 ist frei beweglich und verbindet die beiden Streben 23.1, 24.1 miteinander. Durch diese Anordnung der Streben 23.1, 24.1 wird die durch die Biegung der Streben 23.1, 24.1 verursachte Längenänderung durch Verlagerung der Koppel 29 in Längsrichtung X ausgeglichen.

Um eine in Längsrichtung X besonders kräftefreie Anordnung zu schaffen, ist auch hier eine in Längsrichtung X symmetrische Anordnung besonders vorteilhaft. Eine derartige Anordnung ist in Figur 5 beispielhaft dargestellt. In diesem Fall sind zwei weitere Streben 23.2, 24.2 vorgesehen. Ausgehend vom ersten Befestigungsabschnitt 21.2 und ausgehend vom zweiten Befestigungsabschnitt 22.2 ist jeweils eine dieser weiteren Streben 23.2, 24.2 in die gemeinsame Richtung zu einer weiteren Koppel 29.1 hin verlaufend angeordnet. Auch diese weitere Koppel 29.1 ist frei beweglich und verbindet die beiden weiteren Streben 23.2, 24.2 miteinander.

Auch bei den Ausgestaltungen der Montageelemente 2.1 und 2.2 gemäß der Figuren 4 und 5 ist eine zur Symmetrielinie S des Maßstabs 1 symmetrische einander gegenüberliegende Anordnung gleichartig ausgebildeter Montageelemente 2.1 bzw. 2.2 besonders vorteilhaft.

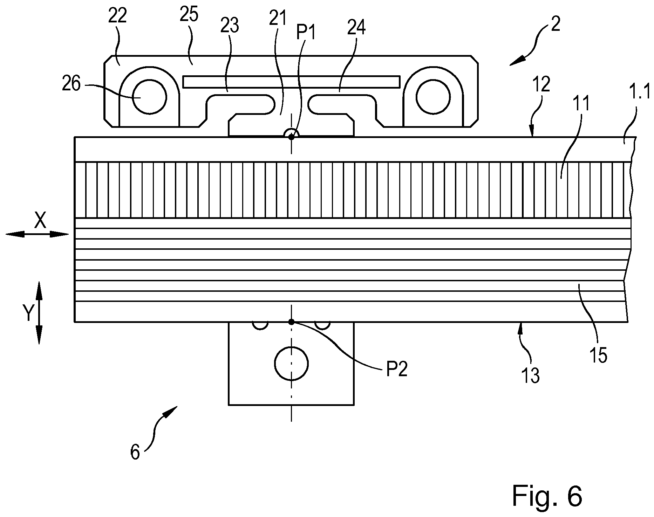

Figur 6 zeigt ein weiteres Ausführungsbeispiel der Erfindung. An der Position P1 (Fixpunkt) ist an einer Seite 12 des Maßstabs 1.1 das Montageelement 2 angebracht, wie anhand der Figuren 1 bis 3 bereits erläutert. Auf der gegenüberliegenden Seite 13 des Maßstabs 1.1 ist an der Position P2 ein Befestigungselement 6 angebracht, welches dazu ausgelegt ist, den Maßstab 1.1 in X-Richtung und in Y-Richtung am Punkt P2 am Träger ortsfest zu fixieren. Das Befestigungselement 6 ist an der Seitenfläche 13 des Maßstabs 1.1 stoffschlüssig befestigt, insbesondere mittels eines festaushärtenden Klebstoffes. Das Befestigungselement 6 weist zur ortsfesten Befestigung am Träger 6 eine Ausnehmung zur Aufnahme einer Schraube auf, mit der das Befestigungselement ortsfest mit dem Träger verschraubbar ist.

Eine derartig ortsfeste Fixierung des Maßstabs 1.1 an einer Seite eignet sich besonders für einen Maßstab 1.1, der neben der Messteilung 11 eine zusätzliche Messteilung 15 aufweist, die zur Positionsmessung in Y-Richtung ausgelegt ist. Wie in der Figur 6 dargestellt ist, ist die zusätzliche Messteilung 15 in Y-Richtung räumlich neben der Messteilung 11 angeordnet. In diesem Fall ist das Befestigungselement 6 auf der Seite des Maßstabs 1.1 angeordnet, auf der die zusätzliche Messteilung 15 vorgesehen ist und das in Y-Richtung ausgleichende Montageelement 2 auf der Seite des Maßstabs 1.1 angeordnet, auf der die Messteilung 11 vorgesehen ist.

Bei allen Ausführungsbeispielen können die Streben 23, 24, 23.1, 24.1, 23.2, 24.2 einstückig an den entsprechenden ersten und zweiten Befestigungsabschnitten 21, 21.1, 21.2, 22, 22.1, 22.2 angeformt sein, alternativ können die Streben auch an den Befestigungsabschnitten befestigte Federbleche sein.

Das Montageelement 2, 2.1, 2.2 ist in vorteilhafter Weise aus einem Material gefertigt, das den gleichen thermischen Ausdehnungskoeffizienten hat wie das Material aus dem der Maßstab 1, 1.1 besteht. Zusätzlich kann auch der Klebstoff 3 diesen thermischen Ausdehnungskoeffizienten aufweisen.

Die Erfindung ist nicht auf das lichtelektrische Abtastprinzip beschränkt. Die Messteilung kann insbesondere auch magnetisch oder induktiv abtastbar ausgebildet sein.

## Patentansprüche

1. Längenmesseinrichtung mit
einem Maßstab (1, 1.1), der sich in einer Längsrichtung (X) erstreckt und der eine Messteilung (11) zur Positionsmessung in Längsrichtung (X) aufweist;
zumindest einem Montageelement (2, 2.1, 2.2), mit dem der Maßstab (1) in Längsrichtung (X) starr an einem Träger (5) befestigbar ist, wobei das Montageelement (2) einen ersten Befestigungsabschnitt (21, 21.1, 21.2) aufweist, mit dem es ortsfest am Maßstab (1, 1.1) angeordnet ist, und einen zweiten Befestigungsabschnitt (22, 22.1, 22.2) aufweist, der dazu ausgebildet ist, mit dem Träger (5) ortsfest befestigt zu werden, wobei zwischen dem ersten Befestigungsabschnitt (21, 21.1, 21.2) und dem zweiten Befestigungsabschnitt (22, 22.1, 22.2) ein Mittel vorgesehen ist, das eine Bewegung des ersten Befestigungsabschnittes (21, 21.1, 21.2) gegenüber dem zweiten Befestigungsabschnitt (22, 22.1, 22.2) senkrecht zur Längsrichtung (X) zulässt,
**dadurch gekennzeichnet dass**
das Mittel eine Anordnung mehrerer biegbarer Streben (23, 24, 23.1, 23.2, 24.1, 24.2) ist, welche durch Biegung eine Bewegung des ersten Befestigungsabschnittes (21, 21.1, 21.2) gegenüber dem zweiten Befestigungsabschnitt (22, 22.1, 22.2) senkrecht zur Längsrichtung (X) zulässt, wobei die Anordnung der Streben (23, 24, 23.1, 23.2, 24.1, 24.2) dazu ausgebildet ist die durch die Biegung verursachte Längenänderung der Streben (23, 24, 23.1, 23.2, 24.1, 24.2) derart auszugleichen, dass daraus keine Bewegung zwischen dem ersten Befestigungsabschnitt (21, 21.1, 21.2) und dem zweiten Befestigungsabschnitt (22, 22.1, 22.2) in Längsrichtung (X) resultiert, wobei die mehreren Streben (23, 24, 23.1, 23.2, 24.1, 24.2) parallel zur Längsrichtung (X) ausgerichtet sind, und
ausgehend vom ersten Befestigungsabschnitt (21) Streben (23, 24) in entgegengesetzte Richtungen zu einer starren Brücke (25) verlaufen, welche die beiden Streben (23, 24) in Längsrichtung (X) starr miteinander verbindet oder
ausgehend vom ersten Befestigungsabschnitt (21.1, 21.2) und ausgehend vom zweiten Befestigungsabschnitt (22.1, 22.2) jeweils eine Strebe (23.1, 24.1; 23.2, 24.2) in die gleiche Richtung zu einer Koppel (29, 29.1) hin verlaufen, welche die beiden Streben (23.1, 24.1; 23.2, 24.2) miteinander verbindet, und die durch die Biegung der Streben (23.1, 24.1; 23.2, 24.2) verursachte Längenänderung durch Verlagerung der Koppel (29, 29.1) in Längsrichtung (X) ausgeglichen wird.

2. Längenmesseinrichtung nach Anspruch 1, wobei ausgehend vom ersten Befestigungsabschnitt (21) Streben (23, 24) in entgegengesetzte Richtungen verlaufen und die durch die Biegung der Streben (23, 24) verursachte Längenänderung durch Dehnung der Streben (23, 24) ausgeglichen wird.

3. Längenmesseinrichtung nach einem der vorhergehenden Ansprüche, wobei die Streben (23, 24, 23.1, 23.2, 24.1, 24.2) in einer Ebene (N) angeordnet sind, welche die neutrale Faser des Maßstabs (1, 1.1) enthält und die Messteilungsebene (14) parallel zu dieser Ebene (N) ausgerichtet ist.

4. Längenmesseinrichtung nach einem der vorhergehenden Ansprüche, wobei der Maßstab (1, 1.1) einen rechteckförmigen Querschnitt mit zwei in Längsrichtung (X) verlaufenden einander gegenüberliegenden Seitenflächen (12, 13) aufweist und die Messteilung (11) innerhalb einer Messteilungsebene (14) angeordnet ist, die senkrecht zu diesen Seitenflächen (12, 13) verläuft.

5. Längenmesseinrichtung nach Anspruch 4, wobei der erste Befestigungsabschnitt (21, 21.1, 21.2) des Montageelementes (2, 2.1, 2.2) an einer der beiden Seitenflächen (12, 13) durch eine stoffschlüssige Verbindung befestigt ist.

6. Längenmesseinrichtung nach Anspruch 5, wobei die stoffschlüssige Verbindung eine Klebeverbindung ist.

7. Längenmesseinrichtung nach Anspruch 6, wobei am ersten Befestigungsabschnitt (21, 21.1, 21.2) in Längsrichtung (X) voneinander beabstandete Abstandhalter (28) angeordnet sind, welche die Seitenfläche (12, 13) des Maßstabs (1, 1.1) kontaktieren und einen Klebespalt zwischen dem ersten Befestigungsabschnitt (21, 21.1, 21.2) und der Seitenfläche (12, 13) des Maßstabes (1, 1.1) vorgeben, und dass in Längsrichtung (X) betrachtet jeweils beidseitig der Abstandhalter (28) ein Klebstoff (3) in diesen Klebespalt eingebracht ist.

8. Längenmesseinrichtung nach einem der vorhergehenden Ansprüche, wobei der Maßstab (1, 1.1) aus einem Material mit einem thermischen Ausdehnungskoeffizient α im Temperaturbereich von 0° bis 50° kleiner als 1,5 x 10⁻⁶K⁻¹, insbesondere aber kleiner als 0,1 x 10⁻⁶K⁻¹ besteht.

9. Längenmesseinrichtung nach einem der vorhergehenden Ansprüche, wobei das Montageelement (2, 2.1, 2.2) einstückig ausgebildet ist.

10. Längenmesseinrichtung nach einem der vorhergehenden Ansprüche, wobei der zweite Befestigungsabschnitt (22, 22.1, 22.2) zumindest eine Ausnehmung (26) zur Aufnahme einer Befestigungsschraube umfasst.

11. Längenmesseinrichtung nach einem der vorhergehenden Ansprüche, wobei an einander gegenüberliegenden Positionen (P1, P2) des Maßstabs (1) jeweils eines der Montageelemente (2, 2.1, 2.2) angeordnet ist.

12. Längenmesseinrichtung nach einem der vorhergehenden Ansprüche 1 bis 10, wobei an einer Position (P1) des Maßstabs (1.1) ein Montageelement (2, 2.1, 2.2) angeordnet ist und an der gegenüberliegenden Position (P2) ein Befestigungselement (6) am Maßstab (1.1) angeordnet ist, das dazu ausgelegt ist, den Maßstab (1.1) in Längsrichtung (X) ortsfest sowie in Querrichtung (Y) dazu ebenfalls ortsfest am Träger (5) zu befestigen.

## Claims

1. Length measuring device having
a scale (1, 1.1) which extends in a longitudinal direction (X) and which has a measurement graduation (11) for position measurement in the longitudinal direction (X);
at least one mounting element (2, 2.1, 2.2) by way of which the scale (1) is able to be fastened rigidly to a carrier (5) in the longitudinal direction (X), wherein
the mounting element (2) has a first fastening portion (21, 21.1, 21.2) by way of which it is arranged in a fixed position on the scale (1, 1.1), and has a second fastening portion (22, 22.1, 22.2) which is configured to be fastened to the carrier (5) in a fixed position, wherein, between the first fastening portion (21, 21.1, 21.2) and the second fastening portion (22, 22.1, 22.2), a means is provided which allows the first fastening portion (21, 21.1, 21.2) to move with respect to the second fastening portion (22, 22.1, 22.2) perpendicularly to the longitudinal direction (X),
**characterized in that**
the means is an arrangement of a plurality of bendable struts (23, 24, 23.1, 23.2, 24.1, 24.2) which, by bending, allows the first fastening portion (21, 21.1, 21.2) to move with respect to the second fastening portion (22, 22.1, 22.2) perpendicularly to the longitudinal direction (X), wherein the arrangement of the struts (23, 24, 23.1, 23.2, 24.1, 24.2) is configured to compensate the change in length of the struts (23, 24, 23.1, 23.2, 24.1, 24.2) brought about by the bending such that no movement between the first fastening portion (21, 21.1, 21.2) and the second fastening portion (22, 22.1, 22.2) in the longitudinal direction (X) results therefrom, wherein the plurality of struts (23, 24, 23.1, 23.2, 24.1, 24.2) are oriented parallel to the longitudinal direction (X), and proceeding from the first fastening portion (21), struts (23, 24) extend in opposite directions to a rigid bridge (25) which connects the two struts (23, 24) rigidly together in the longitudinal direction (X), or
proceeding from the first fastening portion (21.1, 21.2) and proceeding from the second fastening portion (22.1, 22.2), there is in each case one strut (23.1, 24.1; 23.2, 24.2) extending in the same direction to a coupler (29, 29.1) which connects the two struts (23.1, 24.1; 23.2, 24.2) together, and the change in length brought about by the bending of the struts (23.1, 24.1; 23.2, 24.2) is compensated by displacement of the coupler (29, 29.1) in the longitudinal direction (X).

2. Length measuring device according to Claim 1, wherein, proceeding from the first fastening portion (21), struts (23, 24) extend in opposite directions and the change in length brought about by the bending of the struts (23, 24) is compensated by lengthening of the struts (23, 24).

3. Length measuring device according to either of the preceding claims, wherein the struts (23, 24, 23.1, 23.2, 24.1, 24.2) are arranged in a plane (N) which contains the neutral fibre of the scale (1, 1.1), and the measurement graduation plane (14) is oriented parallel to this plane (N).

4. Length measuring device according to one of the preceding claims, wherein the scale (1, 1.1) has a rectangular cross section with two opposite side faces (12, 13) that extend in the longitudinal direction (X), and the measurement graduation (11) is arranged within a measurement graduation plane (14) which extends perpendicularly to these side faces (12, 13).

5. Length measuring device according to Claim 4, wherein the first fastening portion (21, 21.1, 21.2) of the mounting element (2, 2.1, 2.2) is fastened to one of the two side faces (12, 13) by a cohesive connection.

6. Length measuring device according to Claim 5, wherein the cohesive connection is an adhesive bond.

7. Length measuring device according to Claim 6, wherein spacers (28) that are spaced apart from one another in the longitudinal direction (X) are arranged on the first fastening portion (21, 21.1, 21.2), said spacers (28) contacting the side faces (12, 13) of the scale (1, 1.1) and defining a bonding gap between the first fastening portion (21, 21.1, 21.2) and the side face (12, 13) of the scale (1, 1.1), and in that, as seen in the longitudinal direction (X), an adhesive (3) is introduced into this bonding gap in each case on both sides of the spacers (28).

8. Length measuring device according to one of the preceding claims, wherein the scale (1, 1.1) consists of a material having a coefficient of thermal expansion α in the temperature range from 0° to 50° of less than 1.5×10⁻⁶K⁻¹, in particular less than 0.1×10⁻⁶K⁻¹.

9. Length measuring device according to one of the preceding claims, wherein the mounting element (2, 2.1, 2.2) is configured in one piece.

10. Length measuring device according to one of the preceding claims, wherein the second fastening portion (22, 22.1, 22.2) comprises at least one cutout (26) for receiving a fastening screw.

11. Length measuring device according to one of the preceding claims, wherein in each case one of the mounting elements (2, 2.1, 2.2) is arranged at opposite positions (P1, P2) on the scale (1).

12. Length measuring device according to one of the preceding Claims 1 to 10, wherein a mounting element (2, 2.1, 2.2) is arranged at one position (P1) on the scale (1.1), and a fastening element (6) is arranged on the scale (1.1) at the opposite position (P2), said fastening element (6) being designed to fasten the scale (1.1) to the carrier (5) in a fixed position in the longitudinal direction (X) and likewise in a fixed position in the transverse direction (Y) thereto.

## Revendications

1. Dispositif de mesure de longueur présentant
une règle (1, 1.1) qui s'étend dans le sens de la longueur (X) et qui présente une division de mesure (11) qui permet de mesurer une position dans le sens de la longueur (X),
au moins un élément de montage (2, 2.1, 2.2) par lequel la règle (1) peut être fixée sur un support (5) de manière rigide dans le sens de la longueur (X), l'élément de montage (2) présentant une première section de fixation (21, 21.1, 21.2) par laquelle il est immobilisé sur la règle (1, 1.1) et une deuxième section de fixation (22, 22.1, 22.2) configurée pour être fixée en position fixe sur le support (5),
un moyen qui permet un déplacement de la première section de fixation (21, 21.1, 21.2) par rapport à la deuxième section de fixation (22, 22.1, 22.2) perpendiculairement au sens de la longueur (X) étant prévu entre la première section de fixation (21, 21.1, 21.2) et la deuxième section de fixation (22, 22.1, 22.2),
**caractérisé en ce que**
le moyen est un agencement de plusieurs entretoises flexibles (23, 24, 23.1, 23.2, 24.1, 24.2) qui permettent par flexion un déplacement de la première section de fixation (21, 21.1, 21.2) par rapport à la deuxième section de fixation (22, 22.1, 22.2), perpendiculairement au sens de la longueur (X),
**en ce que** l'agencement des entretoises (23, 24, 23.1, 23.2, 24.1, 24.2) est configuré pour compenser la modification de la longueur des entretoises (23, 24, 23.1, 23.2, 24.1, 24.2) provoquée par la flexion de telle sorte qu'il n'en résulte aucun déplacement entre la première section de fixation (21, 21.1, 21.2) et la deuxième section de fixation (22, 22.1, 22.2) dans le sens de la longueur (X),
**en ce que** les différentes entretoises (23, 24, 23.1, 23.2, 24.1, 24.2) sont orientées parallèlement au sens de la longueur (X),
**en ce que** partant de la première section de fixation (21), les entretoises (23, 24) s'étendent dans des directions opposées par rapport à un pont rigide (25) qui relie les deux entretoises (23, 24) l'une à l'autre rigidement dans le sens de la longueur (X) ou
**en ce que** partant respectivement de la première section de fixation (21.1, 21.2) et de la deuxième section de fixation (22.1, 22.2), des entretoises (23.1, 24.1; 23.2, 24.2) s'étendent dans la même direction par rapport à un accouplement (29, 29.1) qui relie l'une à l'autre les deux entretoises (23.1, 24.1; 23.2, 24.2) et
**en ce que** la modification de longueur provoquée par la flexion des entretoises (23.1, 24.1; 23.2, 24.2) est compensée par un déplacement de l'accouplement (29, 29.1) dans le sens de la longueur (X).

2. Dispositif de mesure de longueur selon la revendication 1, dans lequel partant de la première section de fixation (21), des entretoises (23, 24) s'étendent dans des directions opposées, la modification de longueur provoquée par la flexion des entretoises (23, 24) étant compensée par l'allongement des entretoises (23, 24).

3. Dispositif de mesure de longueur selon l'une des revendications précédentes, dans lequel les entretoises (23, 24, 23.1, 23.2, 24.1, 24.2) sont disposées dans un plan (N) qui contient la fibre neutre de la règle (1, 1.1), le plan (14) de division de mesure étant aligné parallèlement à ce plan (N).

4. Dispositif de mesure de longueur selon l'une des revendications précédentes, dans lequel la règle (1, 1.1) présente une section transversale rectangulaire dotée de deux surfaces latérales (12, 13) mutuellement opposées et s'étendant dans le sens de la longueur (X), la division de mesure (11) étant disposée à l'intérieur d'un plan (14) de division de mesure qui s'étend perpendiculairement à ces surfaces latérales (12, 13).

5. Dispositif de mesure de longueur selon la revendication 4, dans lequel la première section de fixation (21, 21.1, 21.2) de l'élément de montage (2, 2.1, 2.2) est fixée sur l'une des deux surfaces latérales (12, 13) par une liaison en correspondance de matière.

6. Dispositif de mesure de longueur selon la revendication 5, dans lequel la liaison en correspondance de matière est une liaison collée.

7. Dispositif de mesure de longueur selon la revendication 6, dans lequel des écarteurs (28) sont disposés à distance mutuelle dans le sens de la longueur (X) sur la première section de fixation (21, 21.1, 21.2), sont en contact avec la surface latérale (12, 13) de la règle (1, 1.1) et définissent des interstices de collage entre la première section de fixation (21, 21.1, 21.2) et la surface latérale (12, 13) de la règle (1, 1.1), un adhésif (3) étant inséré dans ces interstices de collage des deux côtés des écarteurs (28) dans le sens de la longueur (X).

8. Dispositif de mesure de longueur selon l'une des revendications précédentes, dans lequel la règle (1, 1.1) est constituée d'un matériau dont le coefficient de dilatation thermique α dans la plage de température de 0° à 50° est inférieur à 1,5 x 10⁻⁶K⁻¹ et en particulier inférieur à 0, 1 x 10⁻⁶K⁻¹.

9. Dispositif de mesure de longueur selon l'une des revendications précédentes, dans lequel l'élément de montage (2, 2.1, 2.2) est réalisé d'une seule pièce .

10. Dispositif de mesure de longueur selon l'une des revendications précédentes, dans lequel la deuxième section de fixation (22, 22.1, 22.2) comporte au moins une découpe (26) qui permet de reprendre une vis de fixation.

11. Dispositif de mesure de longueur selon l'une des revendications précédentes, dans lequel chacun des éléments de montage (2, 2.1, 2.2) est disposé en des positions mutuellement opposées (P1, P2) de la règle (1).

12. Dispositif de mesure de longueur selon l'une des revendications 1 à 10 qui précèdent, dans lequel un élément de montage (2, 2.1, 2.2) est disposé en une position (P1) de la règle (1.1) et un élément de fixation (6) est disposé sur la règle (1.1) en la position (P2) opposée et est conçu pour fixer la règle (1.1) sur le support (5) en position fixe dans le sens de la longueur (X) ainsi qu'en position fixe dans la direction transversale (Y).
